# EUROPEAN PATENT APPLICATION

(11) **EP 2 573 040 A1**
(43) Date of publication of application: **27.03.2013**
(21) Application number: 11182205.2
(22) Date of filing: 21.09.2011
(51) Int. Cl.: B66F 9/06, B66F 9/14, B62D 1/28, B62D 11/00, B62D 12/00

(54) **Automatically guided vehicle for towing a load**

(71) Applicant: The Automation Group Limited, Gateshead Tyne and Wear NE10 0ES (GB)
(72) Inventor: The designation of the inventor has not yet been filed
(74) Representative: Vinsome, Rex Martin

(57) **Abstract**

An automatically guided vehicle (2) for towing a load (32) is disclosed. The vehicle includes a first body portion (4) and first wheels (6, 8) mounted to the first body portion engage a surface supporting the vehicle. The first wheels are driven at different rotational velocities to cause the first body portion to pivot about a first pivot axis (16). A second body portion (22) is mounted to the first body portion and engages the load. Second wheels (26, 28) are mounted to the second body portion and engage the surface supporting the vehicle. An electromechanical bolt (30) has a first condition in which the first body portion is pivotable relative to the second body portion and a second condition in which the first body portion is prevented from pivoting relative to the second body portion.

## Description

The present invention relates to an automatically guided vehicle for towing a load, and relates particularly, but not exclusively, to an automatically guided vehicle for towing a low level load.

Automatically guided vehicles (AGVs) operate in a similar manner to forklift trucks, but do not have a human operator. As a result, the AGVs can be operated more safely, since they are automatically operated, and can be operated more economically, since the cost of a human operator is saved.

AGVs known as "tugs" or "carts" tow a wheeled load to transport goods between locations in a manufacturing facility. Such known AGVs are adapted to automatically connect to wheeled loads in the form of trolleys by passing beneath a trolley and connecting via a pin mechanism mounted to the top of the tug or cart.

These arrangements suffer from the disadvantage that the AGV must pass through the underside of the load in one direction, and the provision of a pin mechanism mounted to the top of the AGV makes them unsuitable for transporting low level loads, such as wheeled loads of dimensions corresponding to a standard pallet. In addition, such AGVs suffer from the drawback that it is difficult to connect automatically to a trolley and to achieve a tight cornering radius. As a result, wide access aisles and large floor space are required, which significantly add to the cost of goods being manufactured in a manufacturing facility incorporating the AGVs.

Preferred embodiments of the invention seek to overcome one or more of the above disadvantages of the prior art.

According to the present invention, there is provided an automatically guided vehicle for towing a load, the vehicle comprising:-
a first body portion;
a plurality of first wheels mounted to said first body portion and adapted to engage a surface supporting the vehicle, wherein a plurality of said first wheels are adapted to be driven at different rotational velocities to cause said first body portion to pivot relative to said surface about a first pivot axis;
a second body portion mounted to said first body portion and adapted to engage a load to be towed;
at least one second wheel mounted to said second body portion and adapted to engage said surface; and
first locking means having a first condition in which said first body portion is pivotable relative to said second body portion and a second condition in which said first body portion is prevented from pivoting relative to said second body portion.

By providing a plurality of first wheels adapted to be driven at different rotational velocities to cause the first body portion to pivot about a first pivot axis, and first locking means having a first condition in which the first body portion is pivotable relative to the second body portion, and a second condition in which the first body portion is prevented from pivoting relative to the second body portion, this provides the advantage of enabling a smaller turning radius to be achieved because of the high manoeuvrability of the first body portion, while at the same time enabling stability of the vehicle while reversing to engage a load to be towed. In addition, by providing first wheels on the first body portion and second wheels on the second body portion, the provision of additional wheels for balancing the first body portion can be avoided, as a result of which pivoting of the first body portion through a large angle relative to the second body portion is possible. As a result, smaller floor space is required, as a result of which the cost of a manufacturing assembly using the vehicle and the resultant goods is reduced. In addition, the advantage is provided of enabling more compact construction of the vehicle, since steering is achieved by differential driving of the first wheels, as opposed to a separate steering mechanism.

The vehicle may further comprise a plurality of motors, wherein each said motor is adapted to drive at least one said respective said first wheel.

The first locking means may be adapted to actuate a second condition thereof in response to pivoting of the first body portion about the first axis.

This provides the advantage of automatically locking the second body portion in position relative to the first body portion to enable a load engaging operation to be carried out.

The first locking means may comprise at least one electromechanical actuator.

At least one said second wheel may be adapted to rotate about a second axis fixed relative to said second body portion.

This provides the advantage of selectively providing stability in the case of a wheeled load having castor wheels being towed or stability when pivoting about the first axis occurs.

An axis of rotation of at least one said second wheel may be adjustable relative to the second body portion.

The vehicle may further comprise at least one third wheel mounted to said second body portion and adapted to engage said surface, and having an axis of rotation transverse to that of at least one said second wheel.

This provides the advantage of assisting turning of the vehicle in the case of insufficient friction between the first wheels and the surface, while minimising wear between the or each second wheel and the surface when pivoting about the first pivot axis occurs.

The second wheels may be adapted to disengage from said surface in response to engagement of at least one said third wheel with said surface.

The vehicle may further comprise latching means for fastening the second body portion to the load.

The latching means may be adapted to release the load from the second body portion in response to a wireless signal.

The latching means may be adapted to be actuated by movement of the vehicle into engagement with the load.

The latching means may be adapted to release the load from the second body portion in response to engagement of a release mechanism with a release member mounted to said surface.

The latching means may be mounted a third body portion, wherein the third body portion is mounted to the second body portion.

The vehicle may further comprise second locking means having a first condition in which said second body portion is pivotable relative to said third body portion and a second condition in which said second body portion is prevented from pivoting relative to said third body portion.

The vehicle may further comprise biasing means for biasing said third body portion towards an equilibrium position relative to said second body portion.

The release mechanism may comprise a cam follower.

The vehicle may further comprise at least one signal receiver device for receiving wireless signals, wherein at least one said signal receiver device is adapted to be selectively located at one of a plurality of locations on the vehicle.

This provides the advantage of enabling the signal receiver device to receive different types of wireless signals without increasing the complexity of the vehicle.

The vehicle may further comprise a controller for controlling a plurality of said motors and/or said first and/or said second locking means wherein said controller is adapted to receive wireless control signals.

The controller may be adapted to receive wireless control signals from an emitter mounted to the load.

This provides the advantage of enabling information relating to the load, such as the type of goods and/or the destination of the load, to be stored for subsequent control of the vehicle.

The controller may be adapted to control rotation of the first body portion about said first axis in response to a wireless control signal received from an emitter on said surface.

This provides the advantage of improving the accuracy of location of the vehicle.

Preferred embodiments of the invention will now be described, by way of example only and not in any limitative sense, with reference to the accompanying drawings, in which: -
Figure 1 is a schematic plan view of an automatically guided vehicle (AGV) embodying the present invention towing a wheeled load and travelling in a direction parallel to a longitudinal axis of the vehicle;
Figure 2 is a schematic view of the vehicle of Figure 1 towing the wheeled load around a curve;
Figures 3a to 3d show a load engaging process using the vehicle of Figure 1;
Figure 4 is a schematic plan view of the vehicle of Figures 1 and 2 and a friction reducing strip;
Figure 5 is a plan view of a second body portion of a vehicle of a second embodiment of the present invention;
Figure 5a is a plan view of a second body portion of a vehicle of a third embodiment of the present invention;
Figure 6 is a schematic side elevation view of the vehicle and load of Figure 1; and
Figure 7 is a schematic view of a vehicle of a fourth embodiment of the present invention towing the wheeled load around a curve.

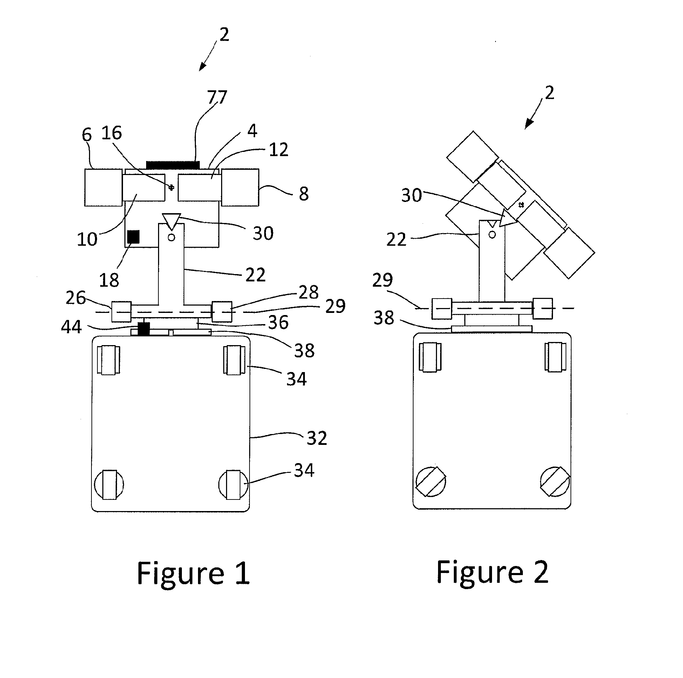

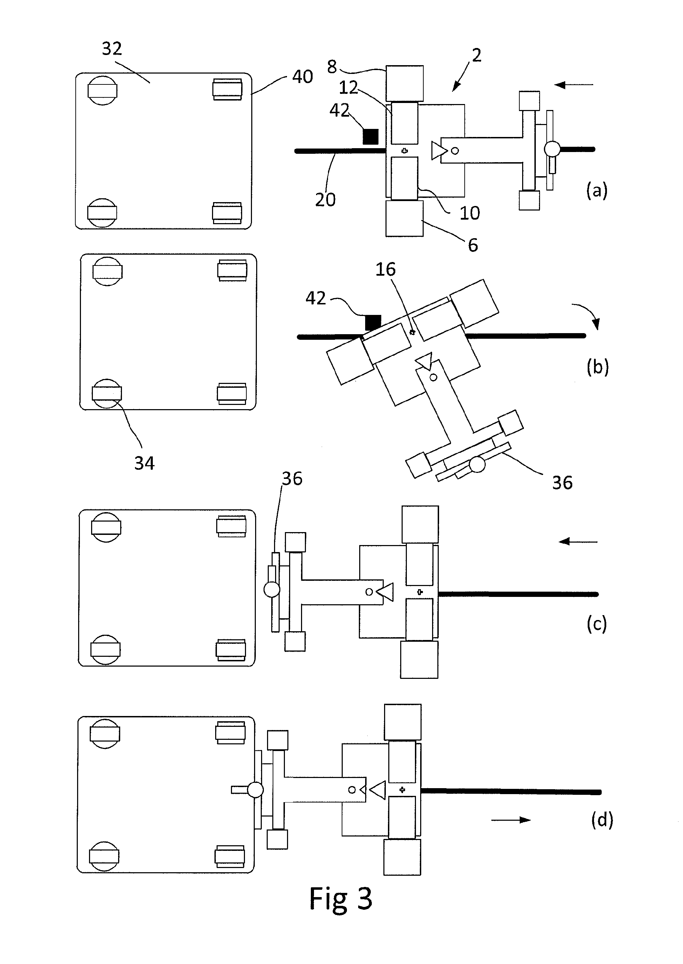

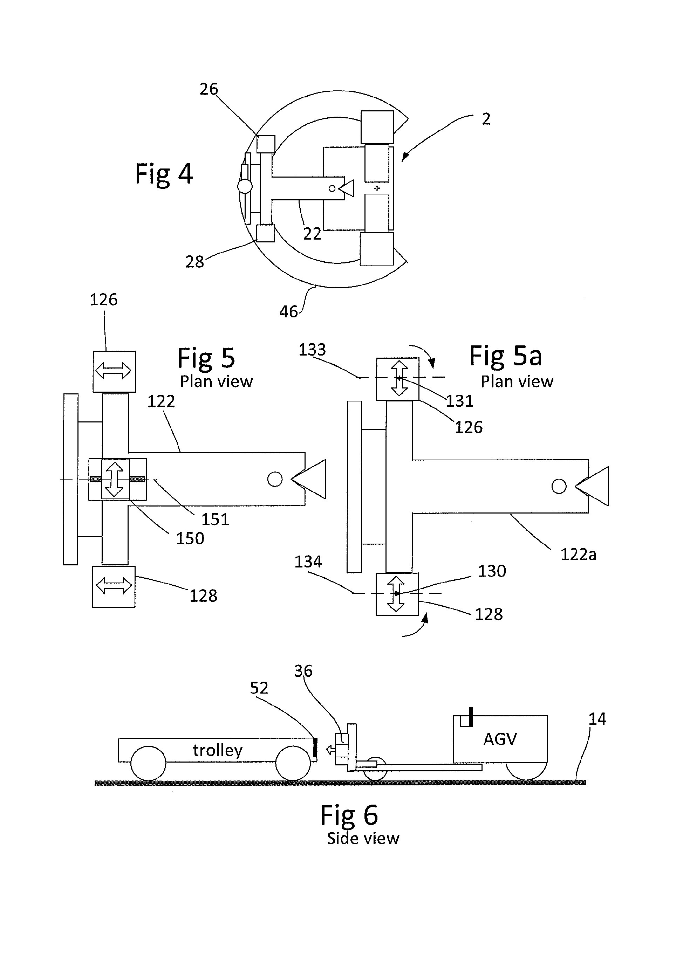

Referring to Figure 1, an automatically guided vehicle (AGV) 2 embodying the present invention has first body portion 4 to which a pair of first wheels 6,8, independently driven by respective motors 10, 12, are mounted, such that the rotational speed of each wheel 6, 8 can be independently altered to provide a differential steering mechanism. The motors 10, 12 can also drive the wheels 6, 8 in opposite senses to enable the first body portion 4 to rotate relative to a surface 14 (Figure 6) on which the vehicle 2 rests, about a first pivot axis 16 located between the wheels 6, 8. A controller (not shown) controls operation of the motors 10, 12 in response to control signals received wirelessly by an RFID reader 18. The angle through which the first body portion 4 rotates about the pivot axis 16 can be controlled by an encoder, or by means of a magnetic strip reader 77 sensing a floor guide strip 20 (Figure 3).

A second body portion 22 is mounted to the first body portion 4 via a second pivot axis 24, located close to the first pivot axis 16, and carries a pair of second wheels 26, 28 which rotate about a fixed rotation axis 29, the second wheels 26, 28 preventing the rear of the first body portion 22 from coming into contact with the surface 14.

First locking means in the form of an electromechanical bolt 30 has a first condition in which the second body portion 22 can pivot about the second pivot axis 24 relative to the first body portion 4, and a second condition in which the bolt 30 locks the first and second body portions 4, 22 in position relative to each other so that such pivoting movement is prevented.

The second body 22 portion engages a trolley 32 having castor wheels 34, the trolley 32 having dimensions similar to those of a standard pallet. The second body portion 22 engages the trolley 32 by means of a latch mechanism 36 having an adapter plate 38, the latch mechanism 36 being operated by the movement of the vehicle 2 into contact with the trolley 32, or by an electromechanical actuator, to fasten the trolley 32 and vehicle 2 together. The latching mechanism 36 can be released by engagement with a floor mounted raised plate (not shown) that engages a cam follower mechanism (not shown) provided on the vehicle, or by means of an electromechanical actuator.

Referring now to Figures 3(a) to 3(d), the operation of the vehicle 2 will now be described.

In order to attach the vehicle 2 to the trolley 32 to enable the trolley 32 to be towed, the vehicle 2 approaches the front 40 of the trolley 32 along the floor guide 20, as shown in Figure 3(a). An identification mark or RFID device 42 located on the surface 14 sends a wireless signal to the RFID receiver 18 on the vehicle 2 to instruct the vehicle 2 to carry out a trolley connection operation. This causes the automatic electromechanical bolt arrangement 30 to be actuated to prevent pivoting of the second body portion 22 relative to the first body portion 4 about the second pivot axis 24.

The controller (not shown) then causes the motors 10, 12 to drive the respective first wheels 6, 8 in opposite senses, which causes the vehicle 2 to pivot about the first pivot axis 16, as shown in Figure 3(b). This rotation of the vehicle 2 continues until the vehicle's magnetic strip reader 77 (Figure 1) detects the presence of the track 20, which indicates that the vehicle has then turned through 180 degrees, as shown in Figure 3(c). It will be appreciated by persons skilled in the art that it is also possible for the vehicle 2 to turn through angles other than 180 degrees, for example when the trolley 32 is arranged at 90 degrees to the original path of the vehicle 2. The vehicle 2 is then caused to reverse a short distance to engage the trolley 32, and the latching mechanism 36 then connects the trolley 32 and the vehicle 2 together. The electromechanical bolt arrangement 30 is then released to enable pivoting of the first body portion 4 relative to the second body portion 22, and the vehicle 2 can then tow the trolley 32 away from its position, as shown in Figure 3(d). Because the second wheels 26, 28 mounted to the second body portion 22 rotate about fixed axis 29, they provide stability to the trolley 32, which has castor wheels 34.

An RFID reader 44 can provide information to the controller regarding the intended destination of the trolley 32. The RFID reader 44 can be fitted with a plug arrangement so that it can be easily moved between locations on the first body portion 4. For example, one position could be on top of the first body portion 4 to read RFID tags on conventional trolleys, and a second possible location is near the front of the trolley 32 where an RFID tag 52 (Figure 6) having information relating to the trolley 32 has been placed.

Referring to Figure 4, in the event of the floor surface 14 being rough, a generally circular arc 46 of low friction material such as nylon can be attached to the surface 14 to provide a smooth surface to enable the second wheels 26, 28 mounted to the second body portion 22 to slide relative to the surface 14.

Referring to Figure 5, a second body portion 122 of a vehicle of a second embodiment of the invention is shown. In order to assist rotation of the vehicle about the first pivot axis, an additional wheel 150 having an axis of rotation at right angles to the axis of rotation of the second wheels 126, 128 is provided and is lowered into contact with the surface 14 by means of a suitable actuating device (not shown) and causes the second wheels 126, 128 to move out of engagement with the surface 14. The third wheel 150 is then able to rotate about rotation axis 151 to assist rotation of the vehicle about the first pivot axis.

Figure 5a shows a second body portion 122a of a vehicle of a third embodiment of the invention. In order to assist rotation of the vehicle about the first pivot axis, second wheels 126, 128 are pivotable about respective pivot axes 131, 130 through respective angles to position respective rotational axes 133, 134 of wheels 126, 128 radially of the first rotation axis 16 (Figure 1). This in turn positions the wheels 126, 128 tangentially to the first rotation axis 16 so as to minimise resistance to rotation of the wheels 126, 128 about respective rotation axes 133, 134. This assists rotation of the vehicle relative to the surface 14.

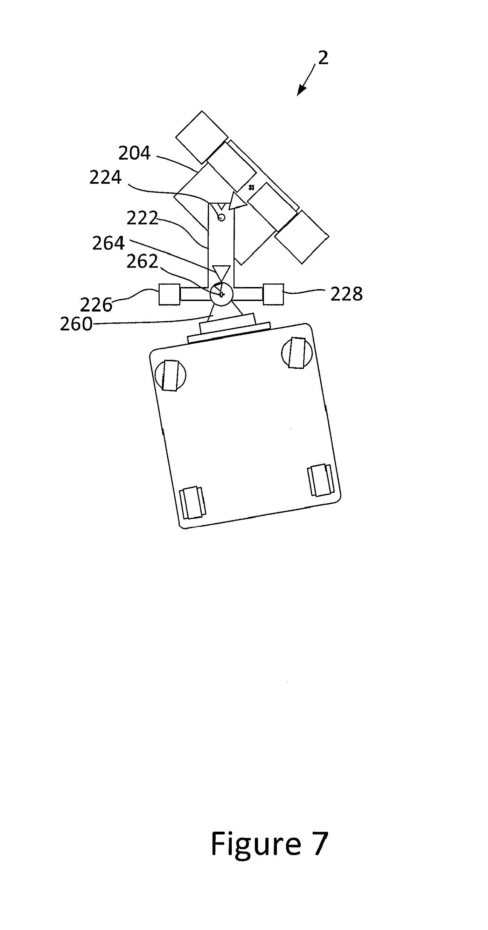

Referring to Figure 7, in which parts common to the embodiment of Figures 1 and 2 are denoted by like reference numerals but increased by 200, an automatically guided vehicle (AGV) 202 of a fourth embodiment of the present invention has first body portion 204 to which a second body portion 222 is mounted via a second pivot axis 224. A pair of second wheels 226, 228 are mounted to the second body portion 222, and a third body portion 260 which engages trolley 32 is mounted to the second body portion 222 via a third pivot axis 262.

Second locking means in the form of an electromechanical bolt 264, which may be of similar construction to the bolt 30 of the embodiment of Figures 1 and 2, has a first condition in which the third body portion 260 can pivot about the third pivot axis 262 relative to the second body portion 222, and a second condition in which the bolt 264 locks the second and third body portions 222, 260 in position relative to each other so that such pivoting movement is prevented. Alternatively, the electromechanical bolt 264 can be replaced by a spring arrangement (not shown), which biases the third body portion 260 to a central position relative to the second body portion 222.

It will be appreciated by persons skilled in the art that the above embodiments have been described by way of example only and not in any limitative sense, and that various alterations and modifications are possible without departure from the scope of the invention as defined by the appended claims.

## Claims

1. An automatically guided vehicle for towing a load, the vehicle comprising:-
a first body portion;
a plurality of first wheels mounted to said first body portion and adapted to engage a surface supporting the vehicle, wherein a plurality of said first wheels are adapted to be driven at different rotational velocities to cause said first body portion to pivot relative to said surface about a first pivot axis;
a second body portion mounted to said first body portion and adapted to engage a load to be towed;
at least one second wheel mounted to said second body portion and adapted to engage said surface; and
first locking means having a first condition in which said first body portion is pivotable relative to said second body portion and a second condition in which said first body portion is prevented from pivoting relative to said second body portion.

2. A vehicle according to claim 1, further comprising a plurality of motors, wherein each said motor is adapted to drive at least one said respective said first wheel.

3. A vehicle according to claim 1 or 2, wherein said first locking means is adapted to actuate a second condition thereof in response to pivoting of the first body portion about the first axis.

4. A vehicle according to any one of the preceding claims, wherein at least one said second wheel is adapted to rotate about a second axis fixed relative to said second body portion.

5. A vehicle according to any one of the preceding claims, wherein an axis of rotation of at least one said second wheel is adjustable relative to the second body portion.

6. A vehicle according to any one of the preceding claims, further comprising at least one third wheel mounted to said second body portion and adapted to engage said surface, and having an axis of rotation transverse to that of at least one said second wheel.

7. A vehicle according to claim 6, wherein said second wheels are adapted to disengage from said surface in response to engagement of at least one said third wheel with said surface.

8. A vehicle according to any one of the preceding claims, further comprising latching means for fastening the second body portion to the load.

9. A vehicle according to claim 8, including one or more of the following features:
(i) wherein said latching means is adapted to release the load from the second body portion in response to a wireless signal;
(ii) wherein said latching means is adapted to be actuated by movement of the vehicle into engagement with the load;
(iii) wherein the latching means is adapted to release the load from the second body portion in response to engagement of a release mechanism with a release member mounted to said surface; or
(iv) wherein said latching means is mounted to a third body portion mounted to said second body portion.

10. A vehicle according to claim 9, including one or more of the following features:
(i) further comprising second locking means having a first condition in which said second body portion is pivotable relative to said third body portion and a second condition in which said second body portion is prevented from pivoting relative to said third body portion;
(ii) further comprising biasing means for biasing said third body portion towards an equilibrium position relative to said second body portion; or
(iii) wherein said release mechanism comprises a cam follower.

11. A vehicle according to any one of the preceding claims, further comprising at least one signal receiver device for receiving wireless signals, wherein at least one said signal receiver device is adapted to be selectively located at one of a plurality of locations on the vehicle.

12. A vehicle according to any one of the preceding claims, further comprising a controller for controlling a plurality of said motors and/or said first and/or second locking means wherein said controller is adapted to receive wireless control signals.

13. A vehicle according to claim 12, wherein said controller is adapted to receive wireless control signals from an emitter mounted to the load.

14. A vehicle according to claim 12 or 13, wherein said controller is adapted to control rotation of the first body portion about said first axis in response to a wireless control signal received from an emitter on said surface.
